Europäisches Patentamt

European Patent Office

Office européen des brevets

(11) Publication number: **0 273 291 B1**

## EUROPEAN PATENT SPECIFICATION

(45) Date of publication of patent specification: **02.11.94**　(51) Int. Cl.⁵: **C08F 297/04**

(21) Application number: **87118511.2**

(22) Date of filing: **14.12.87**

The file contains technical information submitted after the application was filed and not included in this specification

(54) **Clear, High impact block copolymers.**

(30) Priority: **22.12.86 US 944110**

(43) Date of publication of application:
**06.07.88 Bulletin 88/27**

(45) Publication of the grant of the patent:
**02.11.94 Bulletin 94/44**

(84) Designated Contracting States:
**BE DE ES FR GB IT NL**

(56) References cited:
**FR-A- 2 226 412**
**FR-A- 2 260 592**
**US-A- 3 937 760**

**CHEMICAL ABSTRACTS, vol. 104, no. 14, April 1986, page 59, abstract no. 111041z, Columbus, Ohio, US; & JP-A-85 224 521**

(73) Proprietor: **THE FIRESTONE TIRE & RUBBER COMPANY**
**1200 Firestone Parkway**
**Akron, Ohio 44317 (US)**

(72) Inventor: **Dougherty, David J.**
**861 Sheridan Avenue**
**Akron Ohio 44307 (US)**
Inventor: **Sarkar, Sunil B.**
**1061 Northcrest Drive**
**Akron Ohio 44319 (US)**

(74) Representative: **Kraus, Walter, Dr. et al**
**Patentanwälte Kraus, Weisert & Partner**
**Thomas-Wimmer-Ring 15**
**D-80539 München (DE)**

Rank Xerox (UK) Business Services
(3.10/3.09/3.3.3)

## Description

This invention is concerned with a stable or semi-stable suspension of a clear, high impact multiblock copolymer having a vinyl aryl content of at least 76.9 percent produced by a specific process.

Block copolymers which are well-known for toughness and clarity have generally been prepared by batch systems. US-A-3,937,760 first realized a process for producing a multiblock copolymer by a continuous process in which alternative different streams of comonomers are fed continually to a polymerization system with the flow of one stream being terminated when the other stream is being fed to the polymerization system.

Chemical Abstract 111041z (Vol. 104, No. 14, April 1986) discloses a block copolymer film containing a styrenic monomer-diene block copolymer, the ratio of the styrenic monomer to the diene block being from 60/95 to 5/40.

The instant invention utilizes a continuous process to produce clear, high impact block copolymers having a vinyl aryl monomer content of at least 76.9 percent of the block copolymer. This continuous process produces a block copolymer in the form of a stable suspension in an aliphatic solvent. Polymer in the form of suspension can be produced at much higher concentrations than polymers formed in solution.

The preferred product produced by the present continuous process is by nature (1) a blend of block polymers having a styrene content of at least 76.9 percent with (2) individual homopolymers or copolymers which are charged into the system. The number of blocks of the polymers of the blend range from two to about ten with the average number of blocks usually being controlled to be around four to six blocks. This product being a mixture of block polymers nonetheless exhibits superior properties of toughness, flexibility and clarity whether it is extruded as a sheet for packaging or molded into various shapes.

The instant blends of block copolymers which are produced may be further blended with from 0 to 80% by weight of homopolymer resins such as polystyrene to produce blends which possess advantageous properties such as toughness and clarity.

It has been found that when a continuous multiblock polymerization process is utilized and the multiblock polymer contain between 76.9 and 85 percent vinyl aryl contributed blocks a product having properties which has never before been produced is unexpectedly obtained.

The suspensions of the instant invention are made by a continuous process in which alternate different streams of comonomers are fed continually to a polymerization system, the flow of one stream being terminated while the other stream is being fed to the polymerization system. The reaction mixture is agitated very efficiently to insure quick and uniform distribution of the monomers and initiator or catalyst. Initiator is added to the polymerization system either intermittently or continually at a rate such that the proportion of initiator based on the monomer concentration is such as to give the desired molecular weight in the resultant block copolymer. The polymerization product is flowed from the reaction system at the same rate as the total of the feed streams. The average number of blocks in the resultant multiblock copolymer is determined by the number of alternate cycles of feed stream effected during the residence period in the polymerization system. The molecular weight equivalent of each block is determined by the period of flow of the stream of monomer producing such block, provided the concentration of monomer in the monomer feed is constant.

The product of this process is by nature a blend of block polymers and also the individual homopolymers or copolymers which are charged. The number of blocks of the polymers of the blend range from two to about ten preferably controlled between four and six blocks. The term monomer as used herein refers to either a monomer or a comonomer which may be charged.

Depending on the polymerization rate, the change of repeating units from one block of monomer to the other monomer repeating units may be gradual in accordance with how long it takes to use up the first monomer remaining after the flow is terminated and flow of the second comonomer is initiated. This also depends somewhat on the relative polymerization tendencies of the two comonomers. For example with butadiene and styrene, in the presence of each other the butadiene polymerizes much more quickly than the styrene. Therefore when the butadiene flow is terminated aid the styrene feed initiated, the butadiene will still polymerize more rapidly and probably be consumed before the styrene polymerization is initiated. Or it is possible that for a brief interim period there may be random copolymerization of the comonomers. This brief intermediate random copolymerization between respective blocks may not be objectionable since they generally produce little or no change in the properties of the resultant copolymers.

However, if it is desired to avoid this brief period of random copolymerization, this can be effected either by a short delay before initiating the flow of the next monomer or by interjecting a stream of diluent, preferably the same as used in the monomer streams, between the termination of the first monomer stream and the initiation of the flow of the second monomer stream. This stream of diluent should be continued only as long as required to complete polymerization of the first monomer. Subsequently after termination of the second monomer, it may be desirable to interject another stream of diluent before introduction of the next stream of monomer.

However, it may be desirable to interject such a stream of diluent only between streams of monomer where the monomer whose flow has just been terminated has a much slower tendency to polymerize than the monomer whose flow is about to be initiated. In such case the flow of diluent gives such slower monomer sufficient time to polymerize before the faster polymerizing monomer is introduced. In the reverse case where the flow of the faster polymerizing monomer is being terminated and the flow of the slower polymerizing monomer is about to be initiated, an intermediate diluent flow is not as important since the faster monomer may continue to complete polymerization in the presence of the slower monomer. In most cases, however, it is found that the abrupt change from one monomer stream to the other does not effect sufficient changes in properties of the ultimate multiblock copolymer that it is necessary to interject such diluent streams.

The monomers which are useful in the practice of this invention include anionic polymerizable compounds such as at least one vinyl aryl compound such as styrene, alphamethyl styrene, vinyl toluene, vinyl naphthalene, alphamethylvinyl toluene, vinyl diphenyl, and corresponding compounds in which the aromatic nucleus may have other alkyl derivatives up to a total of 8 carbon atoms or may have chlorine attached to the aromatic nucleus such as p-chloro-styrene m-chloro-styrene; 4-chloro-1-vinyl-naphthalene, and the like. Copolymerizable block monomers include dienes such as butadiene-1,3, isoprene, piperylene, chloroprene, and other dienes having up to 8 carbon atoms. Any combination of such comonomers may be used in the practice of the invention.

The final multiblock polymer necessarily must contain between 76.9 and 85 percent vinyl aryl contributed blocks in the finally recovered product to produce the unique feature of the final product. These multi block polymers can also be polyblended with additional vinyl aromatic polymers such as general purpose polystyrene high impact polystyrene and styrene-methacrylate copolymers and maintain superior toughness and clarity characteristics. Typically the multiblock polymers can be blended with 0 to 80 percent of these polymers.

As previously indicated, the molecular weight of the resultant copolymer is determined by the concentration of initiator used in proportion to the total amount of monomer polymerized. This is in accordance with the well known principle that each molecule of initiator produces one molecule of polymer and that the amount of monomer gives as many polymer molecules as there are molecules of initiator. Therefore, the average molecular weight of the product may be obtained by dividing the total number of monomer molecules by the number of initiator molecules.

A "block" of repeating units is generally defined as a sequence or series of eight or more identical repeating units connected to each other. Analyses for block polymers may be made by various methods known in the art. For example, analysis for polystyrene may be made by oxidation with osmium tetraoxide according to the procedure published in Jour. Polymer Sci., Vol. 1, No. 5, P. 429, (1946).

In the process of this invention there may be as few as two blocks but it is generally advantageous to produce copolymers having at least three blocks and preferably at least five blocks. In many cases as many as fifteen or twenty blocks may be desired. It will be noted by those skilled in the art that this unique process can produce polymers tending to begin or end with desirable blocks, as selected by the investigator and produced by appropriate selection of the stages in the cycle.

One or more of the individual feed streams which include diluent, initiator and monomers may be continuously fed to the reactor while one or more feed streams may be cycled on and off.

The initiator used in the polymerization is a compound containing a carbon-lithium or carbon-sodium linkage. This includes compounds corresponding to the formulas RLi and RNa, where R is an aliphatic, cycloaliphatic or aromatic hydrocarbon radical containing from 1 to 20 carbon atoms. Among the many compounds suitable for this purpose are methyllithium, ethyllithium, isopropyllithium, n-butyllithium, sec.-butyllithium, t-butyllithium, amyllithium, hexyllithium, p-octyllithium, n-decyllithium, cyclohexyllithium, allyllithium, methallyllithium, phenyllithium, naphthyllithium, p-tolyllithium, p-butylphenyllithium, 4-phenylbutyllithium and the corresponding sodium compounds. Compounds containing two or more such carbon-metal linkages may also be used, such as dilithium butane, polylithium polymers, etc. Mixtures of two or more of the above may be employed. Particularly preferred is n-butyllithium.

Theoretically, each molecule of initiator produces a molecule of polymer so the initiator level should be the reciprocal of the desired molecular weight in moles of initiator per mole of reactive monomer. In general, however, from 0.01 to 10 millimoles of initiator is required per mole of monomer to be polymerized, preferably from 0.05 to 10 millimoles of initiator per mole of monomer.

An amount of initiator is added at the beginning or with the initial stream of monomer to begin the polymerization and in a proportion to give the desired molecular weight. Thereafter initiator is added either intermittently or continually to replace the amount lost in the exit stream. This subsequent addition may be performed during the flow of either or both monomer streams.

In the polymerization system, it is especially important to exclude materials harmful to the initiator. These materials include water, oxygen, carbon dioxide and other similar materials which "kill" or deactivate the initiator. Preferably the incoming monomers and diluent are treated to remove such impurities prior to introduction to the polymerization system.

The diluent is an aliphatic hydrocarbon of 5-10 carbon atoms which is inert to the initiator employed. The diluent can be one in which the polymer is soluble or partly soluble, or in which the copolymer may be suspended. Pentanes, hexanes, and heptanes are preferred as diluents, especially hexane. Mixtures of these diluents may also be used.

From 200 to 900 parts by weight of diluent per 100 parts of monomer is generally sufficient to yield a fluid polymer solution or suspension which can be easily handled.

The temperature of the polymerization mass should be maintained between 50° and 175°C, preferably 75°-150°C, in order to produce a fast rate of polymerization, and preferably is maintained at a relatively constant temperature throughout the course of the reaction period.

Polymerization is advantageously performed in an agitated, pressurized reactor which may be jacketed to allow for temperature control. Pressures are generally autogenous, although inert gases can be charged to the reactor to increase the pressure, if desired. Dry nitrogen, argon, helium or other inert gas can be used for this purpose. Normally pressures will be atmospheric or above, and can be as high as 9.8 bar (10 atmospheres) or more. The outlet for the exit flow of reaction mixture out of the reactor is advantageously located at a point remote from the inlets for the streams of monomer and catalyst.

The polymer product is posttreated according to regular procedures in such cases, preferably dropping the product solution into methanol or isopropanol containing antioxidant, to deactivate the initiator and to precipitate the copolymer which is then separated and dried before analysis and testing. Water may also be used as a terminator.

The block copolymer products which are prepared by the instant invention are clear and possess high impact strength for thermoforming. These products are especially useful for the production of packaging, drinking cups, food containers, toys and other thermoformable articles.

The invention is illustrated by the following examples. Unless specified otherwise, parts and percentages are given by weight.

EXAMPLE I

A 6.4 l (1.7 gallon) stainless steel reactor is used in continuous anionic polymerization. A semi-continuous outflow of product was achieved by the following repeated charge sequence of (1) 0.082 Kg of 1,3-butadiene and 0.166 Kg of hexane over 5 minutes, then, (2) 0.205 Kg of styrene and 0.041 Kg of hexane over 7.9 minutes, then (3) 0.123 Kg of 1,3-butadiene and 0.41 Kg of styrene and 1.07 Kg of hexane over 32.5 minutes, followed by a 5 minute pause, and finally (5) 0.50 Kg of hexane over 9.7 minutes. Catalyst is continuously added over the entire first 5 minutes of (1) and the first 4 minutes of (2) at the rate of 0.00053 Kg for the 9 minute period.

The rate of addition was such that the average residence time in the reactor was approximately 2 hours resulting in two cycles per residence time and therefore, an average of six blocks per polymer chain. The polymerization temperature was 116°C (240°F)

The block polymer mixture formed in the reactor was a stable suspension in the solvent. The reaction product flowed out of the reactor continuously accept during the 5 minute pause. After polymerization was completed, the living polymer was flowed through a second live line to assure over 99% conversion and was then terminated continuously with a solution of 0.00082 Kg of boric acid in 0.0164 Kg of water. Antioxidants, namely BHT and PNPP were added to the recovered polymer before drying. The suspension was dried using a 30.5 cm (12 inch) laboratory drum dryer and the dry polymer was tested as is and was blended with 50% of general purpose polystyrene (GPPS) and tested. Results of these tests are displayed in Table 1.

EXAMPLE II

The procedure was used in accordance with Example I except the repeated charge sequence was (1) 0.2 Kg of 1,3-butadiene and 0.41 Kg of styrene were added over 34 minutes, then (2) 0.2 Kg of styrene was added over 11 minutes, followed by a 5 minute pause, then (3) 0.5 Kg of hexane wad added over 10 minutes.

N-butyllithium catalysts was added continuously in the amount of 0.00053 Kg for the 45 minute charge cycle of (1) and (2). The addition rates were set to yield one full sequence per hour and a two hour average residence time, thus producing an average of four blocks per polymer chain. The resulting product was a semi-stable suspension in the solvent settling out slowly if not agitated but remixable upon agitation. The polymer was recovered and treated as in Example I and tested. The results of the tests are displayed in Table I.

COMPARATIVE EXAMPLE I

A comparative tapered diblock polymer was produced by batchwise polymerization as disclosed in US-A-4,220,738. A vessel and charge streams were prepared in a manner similar to Example I and the following materials were charged into the vessel: 0.41 Kg of 1,3-butadiene, 1.23 Kg of styrene, 5.0 Kg of hexane and 0.00106 Kg of n-butyllithium. The batch was allowed to polymerize at 116°C (240°F) for 2.5 hours to achieve over 99 percent conversion. The resultant block polymer was very unstable as a suspension in the solvent. The polymer settled out rapidly and was difficult to redisperse. The polymer was recovered and treated as in Example I and tested. The results of the tests are displayed in Table 1.

In the following table the RAW POLYMER was recovered from the suspension and tested. The melt index was determined by ASTM D1238-6ST, 200°C, 5 kg load (gms/10 mins). The block styrene content was determined by osmium tetroxide degradation GB-C-1,415,718). GPC represents Gel Permeation Chromotography. Under the heading EXTRUDED AND FORMED POLYMER each polymer was extruded and formed into an 457 μm (18 mil) sheet to test their performance in applications such as blister packs. Under the heading INJECTION MOLDING each polymer was injection molded using a Battenfield laboratory injection molding machine to test performance of injection molded applications such as toys. Under the heading POLYMER BLENDED 50/50 GPPS each polymer was blended with an equal weight amount of general purpose polystyrene and extruded into 457 μm (18 mil) sheets to test performance in thermoforming applications such as drinking cups.

## TABLE I

| | EXAMPLE | | COMPARATIVE |
| | I | II | EXAMPLE I |
|---|---|---|---|
| **RAW POLYMER** | | | |
| MELT INDEX | 9.6 | 11.3 | 5.5 |
| BOUND STYRENE | 77.0 | 76.9 | 75.8 |
| BLOCK STYRENE | 55 | 58 | 61 |
| GPC - Mw | 111,000 | 106,000 | 134,000 |
| - Mn | 40,000 | 52,000 | 94,000 |
| - Mw/Mn | 2.77 | 2.04 | 1.4 |
| **EXTRUDED AND FORMED POLYMER** | | | |
| MIT FLEX | 1,000+ | 539 | 130 |
| TRANSMISSION HAZE | 2.0 | 10.6 | 4.6 |
| GLOSS | 100+ | 100+ | 100+ |
| HARDNESS, SHORE "D" | 66 | 66 | 66 |
| **INJECTION MOLDED** | | | |
| IZOD (unnotched at room temp - kpm/2.54 cm (ft - lbs/in)) | did not break | did not break | 0.60 (4.3) |
| IZOD - (notched at room temp - kpm/2.54 cm (ft - lbs/in)) | 0.08 (0.61) | 0.06 (0.41) | 0.05 (0.33) |
| TENSILE YIELD (N/mm² (psi)) | 17.6 (2550) | 23.1 (3350) | ? |
| TENSILE @ BREAK (N/mm² (psi)) | 12.2 (1767) | 14.4 (2083) | 28.5 (4133) |
| ELONGATION @ BREAK (%) | 200 | 57 | 10 |
| FLEXURAL MODULUS (N/mm² (psi)) | 863 ($1.25 \times 10^5$) | 1035 ($1.50 \times 10^5$) | 1097 ($1.59 \times 10^5$) |
| TRANSMISSION HAZE | 5.1 | 27 | 7.7 |
| GLOSS | 100+ | 100+ | 100+ |
| HARDNESS, SHORE "D" | 67 | 67 | 68 |
| **POLYMER BLENDED 50/50 GPPS** | | | |
| GARDNER IMPACT (kg (lbs)) | 1.09 (2.4) | 2.40 (5.3) | 0.18 (0.40) |
| MIT FLEX | 1180 | 432 | 0 |
| GLOSS | 100+ | 100+ | 100+ |
| TRANSMISSION HAZE | 4.2 | 6.8 | 3.6 |
| HARDNESS, SHORE "D" | 80 | 78 | 80 |

## Claims

1. A stable or semi-stable suspension in aliphatic diluent of a clear, high impact multiblock copolymer comprised of block polymer units of vinyl aryl containing monomer units and conjugated diene containing monomer units wherein the block copolymer has a vinyl aryl content of between 76.9% and 85% of the block copolymer which is formed by block polymerizing a vinyl aryl containing monomer and a conjugated diene monomer in an aliphatic hydrocarbon diluent using an anionic polymerization initiator with or without the use of inert pressurizing gas by the steps of preparing the block copolymer in a continuous system comprising:

(1) alternately feeding into a highly agitated polymerization system a first monomer stream, and then a second monomer stream, differing in monomer composition from the first monomer stream, each monomer stream being interrupted while the other monomer stream is flowed, and repeating continually the feeding of said alternating streams,

(2) adding to the polymerization system an anionic polymerization initiator capable of polymerizing each of said monomers, the rate of addition of said catalyst being controlled to give the desired molecular weight to the resultant multiblock copolymer, said polymerizing being carried out in aliphatic hydrocarbon diluent to produce said copolymer in stable or semi-stable suspension in said diluent as a product,

(3) withdrawing from said polymerization system a product stream at the same rate as the total of said feed streams whereby there is substantially continual flow through said polymerization system.

2. The suspension of claim 1 in which the size of each block in the resultant multiblock copolymer is controlled by the concentration and the length of the respective periods of flow and the said monomers, a longer period of flow of a stream of fixed concentration of particular monomer producing a higher molecular weight equivalent in the corresponding block of that monomer.

3. The suspension of claim 1 in which the number of blocks in the resultant multiblock copolymer is controlled by the number of alternating monomer feed steps that are performed during the residence time in said polymerization system.

4. The suspension of claim 1 in which a single monomer is used in each monomer stream.

5. The suspension of claim 1 in which the vinyl aryl monomer is styrene.

6. The suspension of claim 1 in which the conjugated diene is butadiene.

7. The suspension of claim 6 in which the anionic catalyst is n-butyl lithium.

8. The suspension of claim 1 in which there are at least three alternate feedings of monomer during the residence period in said system.

9. The suspension of claim 1 in which a third monomer stream differing in monomer composition from each of said first and second monomer streams is fed into said polymerization system after each feeding of said second monomer stream and prior to each repetition of the feeding of said first monomer stream.

10. The suspension of claim 1 in which at least one of said monomer streams is a mixture of at least two copolymerizable monomers.

11. The suspension of claim 1 in which one or more feed streams are fed continuously to the reactor and one or more feed streams are cycled on and off.

**Patentansprüche**

1. Stabile oder semistabile Suspension eines klaren Multiblock-Copolymeren mit hoher Schlagfestigkeit, bestehend aus Blockpolymereinheiten von Vinylaryl-enthaltenden Monomereinheiten und konjugiertes Dien enthaltenden Monomereinheiten, in einem aliphatischen Verdünnungsmittel, wobei das Blockcopolymere einen Vinylarylgehalt zwischen 76,9 und 85% des Blockcopolymeren aufweist und wobei dieses durch Blockpolymerisation eines Vinylaryl-enthaltenden Monomeren und eines konjugierten Dienmonomeren in einem aliphatischen Kohlenwasserstoff-Verdünnungsmittel unter Verwendung eines anionischen Polymerisationsinitiators mit oder ohne Verwendung eines inerten Unterdrucksetzungsgases durch die Stufen der Herstellung des Blockcopolymeren in einem kontinuierlichen System, welche folgendes umfassen, gebildet wird:

(1) abwechselnd erfolgende Einleitung eines ersten Monomerstroms in ein hochdurchbewegtes Polymerisationssystem und sodann eines zweiten Monomerstroms mit unterschiedlicher Monomerzusammensetzung gegenüber dem ersten Monomerstrom, wobei jeder Monomerstrom unterbrochen wird, während der andere Monomerstrom fließt, und kontinuierliche Wiederholung der Einleitung der genannten abwechselnden Ströme,

(2) Zugabe eines anionischen Polymerisationsinitiators, der dazu imstande ist, die einzelnen der genannten Monomeren zu polymerisieren, zu dem Polymerisationssystem, wobei die Zugabegeschwindigkeit des Katalysators so kontrolliert wird, daß das gewünschte Molekulargewicht des resultierenden Multiblock-Copolymeren erhalten wird, und wobei die Polymerisation in einem aliphatischen Kohlenwasserstoff-Verdünnungsmittel durchgeführt wird, um das Copolymere in einer stabilen oder halbstabilen Suspension in dem Verdünnungsmittel als Produkt herzustellen,

(3) Abziehen eines Produktstroms aus dem Polymerisationssystem mit der gleichen Geschwindigkeit wie die Gesamtgeschwindigkeit der genannten Beschickungsströme, wodurch ein im wesentlichen kontinuierlicher Fluß durch das Polymerisationssystem hindurch erzielt wird.

2. Suspension nach Anspruch 1, dadurch **gekennzeichnet,** daß die Größe jedes Blocks in dem resultierenden Multiblock-Copolymeren durch die Konzentration und die Länge der jeweiligen Fließzeiten und der genannten Monomeren kontrolliert wird, wobei eine längere Fließzeit eines Stroms mit fixierter Konzentration des jeweiligen Monomeren in dem entsprechenden Block dieses Monomeren ein höheres Molekulargewichtsäquivalent ergibt.

3. Suspension nach Anspruch 1, dadurch **gekennzeichnet,** daß die Anzahl der Blöcke in dem resultierenden Multiblock-Copolymeren durch die Anzahl der abwechselnden Monomer-Beschickungsstufen, die während der Verweilzeit in dem Polymerisationssystem durchgeführt werden, kontrolliert wird.

4. Suspension nach Anspruch 1, dadurch **gekennzeichnet,** daß in jedem Monomerstrom ein einziges Monomeres verwendet wird.

5. Suspension nach Anspruch 1, dadurch **gekennzeichnet,** daß das Vinylarylmonomere Styrol ist.

6. Suspension nach Anspruch 1, dadurch **gekennzeichnet,** daß das konjugierte Dien Butadien ist.

7. Suspension nach Anspruch 6, dadurch **gekennzeichnet,** daß der anionische Katalysator n-Butyl-lithium ist.

8. Suspension nach Anspruch 1, dadurch **gekennzeichnet,** daß mindestens drei abwechselnde Beschickungen des Monomeren während der Verweilzeit in dem genannten System erfolgen.

9. Suspension nach Anspruch 1, dadurch **gekennzeichnet,** daß ein dritter Monomerstrom mit unterschiedlicher Monomerzusammensetzung gegenüber sowohl dem ersten und dem zweiten Monomerstrom in das Polymerisationssystem nach der Einleitung des zweiten Monomeren und vor jeder Wiederholung der Einleitung des ersten Monomerstroms eingeleitet wird.

10. Suspension nach Anspruch 1, dadurch **gekennzeichnet,** daß mindestens einer der genannten Monomerströme ein Gemisch von mindestens zwei copolymerisierbaren Monomeren ist.

11. Suspension nach Anspruch 1, dadurch **gekennzeichnet,** daß ein oder mehrere Beschickungsströme kontinuierlich in den Reaktor eingeleitet werden und daß ein oder mehrere Beschickungsströme periodisch eingeleitet und abgeschaltet werden.

**Revendications**

1. Suspension stable ou semi-stable dans un diluant aliphatique d'un copolymère multiséquencé transparent à grande résistance au choc formé de motifs de blocs polymériques consistant en motifs monomériques à fonction vinylaryle et motifs monomériques à fonction diène conjugué, dans laquelle le copolymère séquencé possède une teneur en vinylaryle de 76,9 % à 85 % du copolymère séquencé qui est formé par polymérisation séquencée d'un monomère à fonction vinylaryle et d'un monomère diénique conjugué dans un diluant hydrocarboné aliphatique au moyen d'un initiateur de polymérisation anionique avec ou sans l'utilisation d'un gaz inerte de mise sous pression, par les étapes de préparation du copolymère séquencé dans un système continu, comprenant :

(1) l'introduction de manière alternative dans un système de polymérisation sous agitation énergique d'un premier courant de monomères, puis d'un second courant de monomères, dont la composition en monomères diffère de celle du premier courant de monomères, l'introduction de chaque courant de monomères étant interrompue lors de l'écoulement de l'autre courant de monomères, et la répétition continuelle de l'introduction desdits courants alternés,

(2) l'addition au système de polymérisation d'un initiateur de polymérisation anionique capable de provoquer la polymérisation de chacun desdits monomères, la vitesse d'addition dudit catalyseur étant régulée de manière à conférer le poids moléculaire désiré au copolymère multiséquencé résultant, ladite polymérisation étant conduite dans un diluant hydrocarboné aliphatique pour produire ledit copolymère en suspension stable ou semi-stable dans ledit diluant, comme produit,

(3) le déchargement, à partir dudit système de polymérisation, d'un courant de produit à la même vitesse que le total desdits courants d'alimentation, ce qui fait qu'il existe un écoulement pratiquement continu à travers ledit système de polymérisation.

2. Suspension suivant la revendication 1, dans laquelle la dimension de chaque bloc dans le copolymère multiséquencé résultant est ajustée par la concentration des monomères et la durée des périodes respectives d'écoulement de ces monomères, un plus long temps d'écoulement d'un courant de concentration fixe d'un monomère particulier engendrant un plus haut équivalent de poids moléculaire dans le bloc correspondant de ce monomère.

3. Suspension suivant la revendication 1, dans laquelle le nombre de blocs dans le copolymère multiséquencé résultant est ajusté par le nombre d'étapes alternées d'introduction de monomères qui sont mises en oeuvre au cours du temps de séjour dans le système de polymérisation.

4. Suspension suivant la revendication 1, dans laquelle un seul monomère est utilisé dans chaque courant de monomères.

5. Suspension suivant la revendication 1, dans laquelle le monomère vinyl-aryle est le styrène.

6. Suspension suivant la revendication 1, dans laquelle le diène conjugué est le butadiène.

7. Suspension suivant la revendication 6, dans laquelle le catalyseur anionique est le n-butyl-lithium.

8. Suspension suivant la revendication 1, dans laquelle il existe au moins trois introductions alternées de monomères au cours du temps de séjour dans le système.

9. Suspension suivant la revendication 1, dans laquelle un troisième courant de monomères dont la composition en monomères diffère de celle de chacun des premier et deuxième courants de monomères est introduit dans le système de polymérisation après chaque introduction dudit deuxième courant de monomères et avant chaque répétition de l'introduction dudit premier courant de monomères.

10. Suspension suivant la revendication 1, dans laquelle au moins un des courants de monomères consiste en un mélange d'au moins deux monomères copolymérisables.

11. Suspension suivant la revendication 1, dans laquelle un ou plusieurs courants d'alimentation sont introduits de manière continue dans le réacteur et un ou plusieurs courants d'alimentation sont introduits de manière cyclique.